# FASCICULE DE BREVET EUROPEEN

(11) **EP 2 662 269 B1**
(45) Date de publication et mention de la délivrance du brevet: **07.01.2015**
(21) Numéro de dépôt: 13165165.5
(22) Date de dépôt: 24.04.2013
(51) Int. Cl.: B62D 33/06, B62D 33/10

(54) **Dispositif de suspension de cabine de véhicule**
Vorrichtung zur Aufhängung einer Fahrzeugkabine
Suspension device for the cab of a vehicle

(30) Priorité: 11.05.2012 FR 1254306
(43) Date de publication de la demande: 13.11.2013
(73) Titulaire: MANITOU BF, 44150 Ancenis (FR)
(72) Inventeur: Champion, Philippe, 44370 MONTRELAIS (FR)
(74) Mandataire: Kaspar, Jean-Georges

(56) Documents cités:
- WO-A1-97/46439
- WO-A1-2008/051138
- WO-A1-2008/051139
- FR-A1- 2 822 791

## Description

L'invention est relative à un dispositif de suspension de cabine de véhicule.

L'invention est particulièrement utile pour la suspension de cabines de véhicules tout terrain, soumis à des chocs de grande amplitude.

Une application particulière de l'invention est la suspension de cabines de chariots de manutention tout terrain, en particulier de cabines de chariots à bras télescopique.

De manière connue, la suspension des cabines de chariots à bras télescopique comporte trois ou quatre points d'appui munis de supports caoutchoutés. Ces supports caoutchoutés assurent une filtration limitée des vibrations dans les basses fréquences, lors de chocs d'amplitude importante de l'ordre du décimètre.

Un autre système de suspension pour tracteurs agricoles ou machines tout terrain comporte des ensembles à ressort et amortisseur à course linéaire, présentant un degré de liberté selon la direction de translation verticale. Ce système de suspension impose cependant de stabiliser les autres degrés de liberté par l'utilisation de bielles ou de parallélogrammes. L'indépendance des points d'appui et la répartition des masses laissent cependant apparaître des couplages perturbateurs entre les mouvements de pompage, de tangage, et de roulis de la cabine.

Pour éviter ces mouvements indésirables, on peut prévoir des barres de torsion stabilisatrices limitant le couplage. On peut également prévoir des systèmes actifs comportant des actionneurs et des capteurs pilotés par l'informatique embarquée de la machine comportant la cabine.

Le document FR 2 749 265 décrit une suspension principale avec une seule et unique barre de torsion en U pour limiter les liaisons entre le châssis et la caisse suspendue. La barre est solidarisée par des fixations au niveau de sa base et par deux articulations en rotation respectivement aux extrémités de ses bras. La réduction des ponts sonores entre le châssis et la cabine de conduite du véhicule permet l'insonorisation de la cabine de façon notable et à moindres frais. L'utilisation de la barre de torsion en U constituant un unique organe de suspension principale permet ainsi de réduire le coût de suspension de la cabine. Cependant, pour éviter des mouvements de tangage, on prévoit une barre secondaire de torsion en forme de U interposée entre la cabine et le châssis. Cette barre secondaire de torsion en forme de U est disposée de sorte que sa base s'étende parallèlement à l'axe du véhicule et que ses bras s'étendent transversalement au dit axe.

Le document FR 2 822 791 décrit un dispositif de suspension qui comporte une barre de torsion en U, qui reprend la réaction statique en tangage de la cabine de véhicule, et qui comporte des moyens distincts 6 à 10 de fixation de la cabine sur le châssis du véhicule pour assurer le maintien en position stable de la cabine de véhicule.

Le document WO 97/46 439 décrit un dispositif de suspension qui comporte une barre de torsion en U, qui reprend la réaction statique en tangage de la cabine de véhicule, et qui comporte des moyens distincts 6 à 12 de fixation de la cabine sur le châssis du véhicule pour assurer le maintien en position stable de la cabine de véhicule.

Un premier but de l'invention est d'améliorer l'état de la technique connue, notamment du document FR 2 749 265, en proposant un dispositif de suspension de réalisation compacte, de fabrication simple et avec un nombre réduit de pièces en mouvement.

Un deuxième but de l'invention est d'éviter le couplage des mouvements de pompage, de tangage, et de roulis.

L'invention a pour objet un dispositif de suspension de cabine de véhicule comportant une barre principale de torsion en U et un actionneur principal, caractérisé en combinaison par le fait que la barre principale de torsion en U est disposée sensiblement selon l'axe longitudinal du véhicule, pour assurer le maintien en position stable et reprendre intégralement la réaction statique en tangage de la cabine, et par le fait que le dispositif comporte un moyen amortisseur secondaire dynamique disposé à l'avant de la cabine.

Selon d'autres caractéristiques alternatives de l'invention :
- les extrémités de la barre de torsion en U peuvent être fixées à l'avant et à l'arrière de la cabine, ou les extrémités de la barre de torsion en U peuvent être fixées au châssis du véhicule ;
- l'actionneur principal est avantageusement disposé à l'arrière de la cabine ;
- l'actionneur principal est de préférence choisi dans le groupe comportant : un ensemble classique à ressort hélicoïdal et amortisseur hydraulique télescopique, un système pneumatique ou oléopneumatique passif, un système hydropneumatique actif couplé à un calculateur électronique, un système à amortissement variable magnéto-rhéologique, et un ressort élastomère ;
- au moins une extrémité de la barre de torsion en U peut être reliée à la cabine par l'intermédiaire d'un moyen amortisseur ;
- le moyen amortisseur secondaire peut être un moyen amortisseur élastomère ;
- le moyen amortisseur secondaire peut être un amortisseur à inertie ;
- le moyen amortisseur peut être un amortisseur hydraulique télescopique ;
- le dispositif peut comporter un mécanisme contrôlant le déplacement relatif des points hauts et bas d'un quadrilatère déformable formé par les points d'articulation d'un bras et de la barre de torsion en U.

L'invention sera mieux comprise grâce à la description qui va suivre, donnée à titre d'exemple non limitatif en référence aux dessins annexés dans lesquels :
La figure 1 représente schématiquement une vue en perspective d'un dispositif de suspension de cabine intégré à un véhicule tout terrain.
La figure 2 représente schématiquement une vue arrière d'un dispositif de suspension de la figure 1 selon l'invention.
La figure 3 représente schématiquement une vue arrière d'un autre dispositif selon l'invention.
La figure 4 représente schématiquement une vue en perspective d'un chariot tout terrain équipé d'un deuxième dispositif de suspension de cabine selon l'invention.
La figure 5 représente schématiquement une vue en perspective d'un troisième dispositif de suspension de cabine intégré à un véhicule tout terrain.

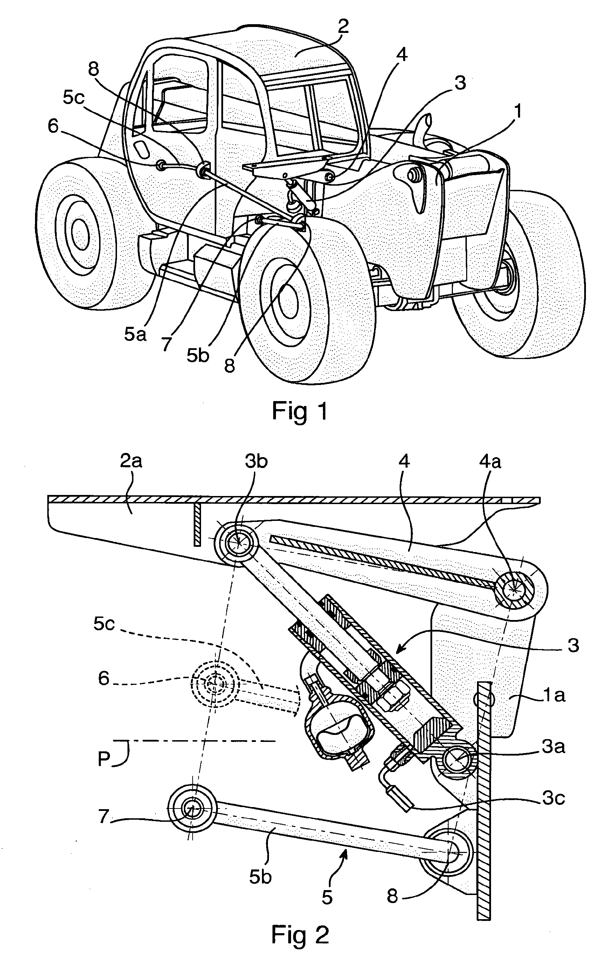

En référence aux figures 1 à 5, les éléments identiques ou fonctionnellement équivalents sont repérés par des chiffres de référence identiques.

Sur la figure 1, un chariot tout terrain, par exemple un chariot à bras télescopique, comporte un châssis (1) automoteur et une cabine (2) suspendue par rapport au châssis automoteur (1).

Le châssis (1) comporte un renfort (1a) et la cabine (2) comporte un support (2a).

Un organe (3) d'amortissement, par exemple un organe (3) oléopneumatique, et un bras (4) de suspension sont montés entre le châssis (1) automoteur et la cabine (2) suspendue par rapport au châssis automoteur (1).

De manière avantageuse, le vérin oléopneumatique (3) est monté sur deux axes (3a, 3b), tandis que le bras (4) est monté sur un axe (4a) et l'axe (3b) précité commun au vérin oléopneumatique (3).

L'axe (4a) et l'axe (3a) sont solidaires du châssis (1), tandis que l'axe (3b) est solidaire de la cabine (2).

Une barre principale de torsion (5) en U comportant une base (5a) et deux bras latéraux (5b, 5c) est montée entre la cabine (2) et le châssis (1).

La barre principale de torsion (5) en U est articulée à ses extrémités sur deux axes (6 et 7) de la cabine et par sa partie médiane (5a) sur des paliers (8) du châssis (1).

Les points d'articulation (3b, 4a, 7 et 8) définissent un quadrilatère déformable dont deux points (4a et 8) se trouvent sur le châssis (1) et deux autres points (3b et 7) se trouvent sur la cabine (2).

L'organe (3) de suspension assure essentiellement le filtrage vertical des chocs et vibrations lors du déplacement du chariot tout terrain.

Le triangle formé par les sommets (3a, 3b et 4a) se déforme en filtrant les vibrations et les mouvements de tangage et de roulis de la cabine (2).

Le maintien en position stable de la cabine (2) est assuré par la barre de torsion (5) en U comportant les éléments (5a, 5b, 5c).

L'articulation (6) est placée sensiblement au-dessus du plan défini par les éléments (5a, 5b) de la barre de torsion en U.

La barre de torsion (5) en U comporte ainsi un élément (5c) coudé vers le haut, de sorte que le point d'articulation (6) sur la cabine est notablement plus élevé que le point d'articulation (7) situé à l'arrière de la cabine.

En prévoyant une barre de torsion (5) en U de grande raideur, les sollicitations verticales et transversales sont reprises intégralement par l'organe (3) élastique d'amortissement.

La transmission des réactions entre l'avant et l'arrière de la cabine (2) est assurée par la barre de torsion (5) interagissant avec les articulations avant (6) et arrière (7).

La raideur de la barre de torsion (5) en U permet le report des réactions entre l'avant et l'arrière de la cabine (2) pour amortir le tangage de la cabine (2).

Sur la figure 2, le dispositif de suspension selon l'invention est représenté en position neutre.

Le dispositif de suspension selon l'invention comporte le support (2a) solidaire de la cabine (2), le renfort (1a) solidaire du châssis (1), l'organe (3) d'amortissement, et la barre de torsion (5) en U articulée à ses deux extrémités aux axes (6 et 7).

L'organe (3) d'amortissement comporte dans cet exemple une sortie (3c) pour une correction de hauteur, dans le cas où l'opérateur du chariot tout terrain souhaite modifier l'assise ou la hauteur de la cabine (2) pour le travail en cours.

Les axes (6 et 7) sont solidaires de la cabine (2) dans ce mode de réalisation.

Le dispositif de suspension incliné par rapport à la direction verticale de sollicitation permet d'amortir partiellement une sollicitation horizontale, due par exemple à un freinage ou une sollicitation horizontale et verticale combinée due par exemple à un passage sur terrain difficile.

Les bras (5b et 5c) peuvent présenter une différence de longueur pour induire un comportement dynamique particulier en raideur et en amortissement dépendant du placement du point d'articulation (6).

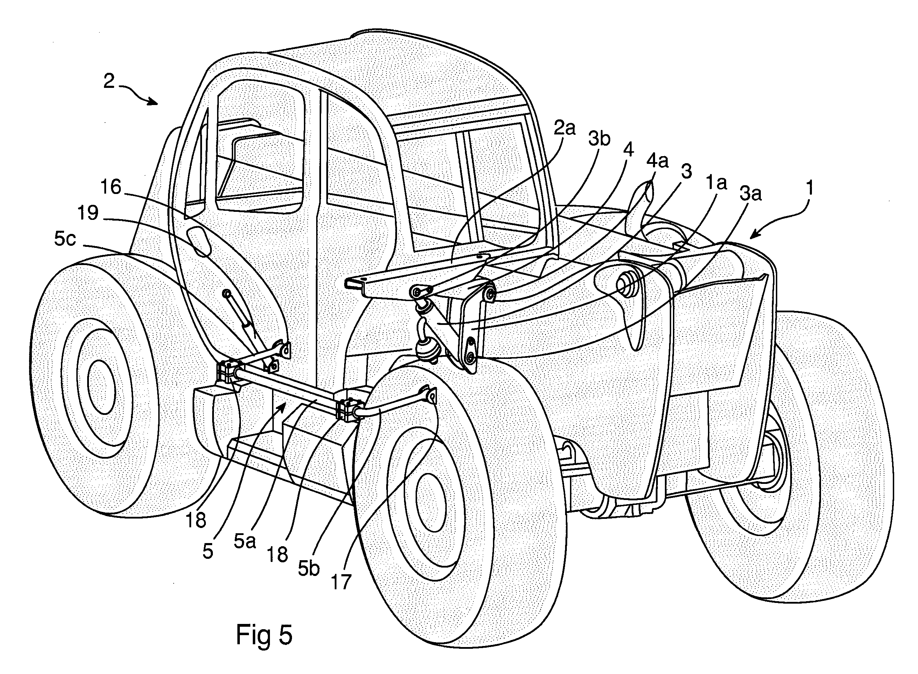

Un organe auxiliaire d'amortissement (19) tel que représenté sur la figure 5 peut également être monté entre la cabine (2) et le châssis (1), à l'avant de la cabine (2) pour suppléer le manque d'amortissement intrinsèque de la barre de torsion et de ses paliers caoutchoutés.

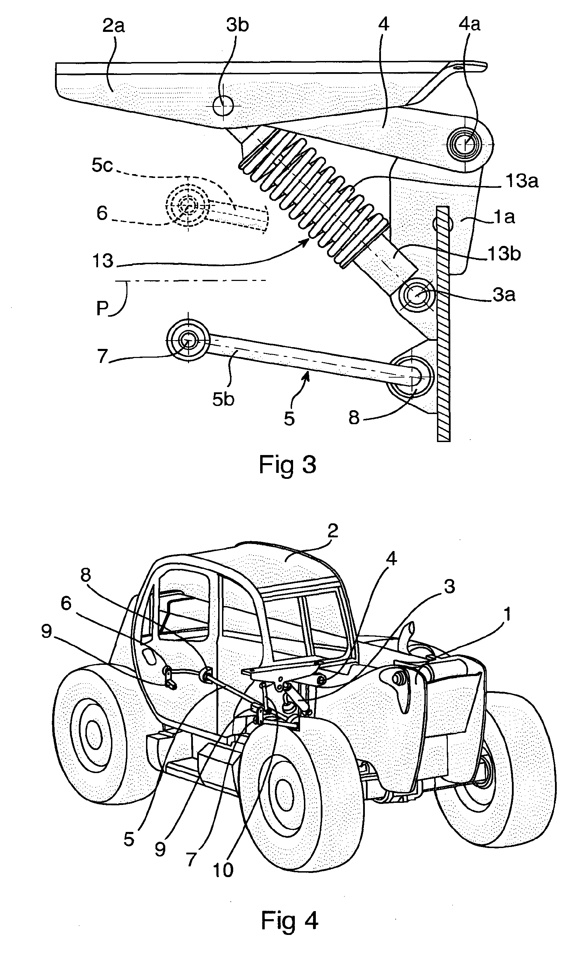

Sur la figure 3, un autre dispositif selon l'invention comporte un bras (4) articulé entre le châssis (1) et la cabine (2), une barre de torsion (5) en U montée par ses extrémités (6 et 7) à la cabine (2) et articulée sur les paliers (8) du châssis (1), et un élément amortisseur (13).

L'élément amortisseur (13) comporte un ressort hélicoïdal (13a) et un amortisseur hydraulique télescopique (13b).

Les points d'articulation (3b, 4a, 8 et7) définissent un quadrilatère déformable dont la déformation est amortie par l'élément amortisseur (13).

L'élément amortisseur (13) comportant le ressort hélicoïdal (13a) et l'amortisseur hydraulique télescopique (13b) peut être remplacé par tout système équivalent sans sortir du cadre de la présente invention.

Ainsi, tout élément élastique ou amortisseur peut être monté à la place de l'organe (3) ou de l'élément amortisseur (13), par exemple : un système pneumatique passif sans correction de hauteur, un système oléopneumatique passif sans correction de hauteur, un système hydropneumatique actif couplé à un calculateur électronique, un système à amortissement variable magnéto-rhéologique ou un simple ressort élastomère.

Le choix de l'élément élastique principal amortisseur est effectué par l'homme du métier selon le niveau de performance désiré du dispositif de suspension.

Dans l'exemple représenté, les points d'articulation (6 et 7) des extrémités de la barre de torsion (5) en U sont disposés de part et d'autre de la cabine (2), cette disposition pouvant être modifiée sans sortir du cadre de l'invention.

Dans le cas où on souhaite incorporer un système de flexibilité plus grande en roulis, ou même si l'on souhaite imposer un mouvement pendulaire, on place les deux points d'articulation (6 et 7) dans les positions correspondantes.

Pour assurer la stabilité de la cabine (2), on place de préférence au moins un des points d'articulation (6 ou 7) au-dessus du plan (P) contenant le centre de gravité de la cabine.

Sur la figure 4, un autre mode de réalisation de chariot tout terrain selon l'invention comporte un dispositif de suspension présentant une barre de torsion (5) en U, et un quadrilatère déformable défini par des points d'articulation (4a, 3b, 7 et 6), et un organe ou élément amortisseur (3).

Les extrémités (7 et 8) de la barre de torsion (5) en U ne sont pas fixées de manière rigide à la cabine (2), mais sont reliées par l'intermédiaire d'un dispositif amortisseur supplémentaire (9) à un point fixe de la cabine (2).

La présence des éléments élastiques (9) assure une plus grande flexibilité latérale. Dans le cas où on souhaite imposer un mouvement pendulaire, tout en limitant le roulis de la cabine (2), on peut prévoir la disposition d'un mécanisme (10) à bielle pour contrôler le déplacement relatif des points hauts (3b) et bas (7) du quadrilatère déformable (3b, 4a, 8 et 7).

Le mécanisme (10) permet ainsi d'assurer un asservissement de mouvement lors du fonctionnement du dispositif de suspension selon l'invention.

Sur la figure 5, un autre mode de réalisation de chariot tout terrain selon l'invention comporte un dispositif de suspension présentant une barre de torsion (5) en U, un quadrilatère déformable défini par des points d'articulation (4a, 3b, 17 et 18), et un organe ou élément amortisseur (3).

Le châssis (1) comporte un renfort (1a) et la cabine (2) comporte un support (2a).

Un organe (3) oléopneumatique d'amortissement et un bras (4) de suspension sont montés entre le châssis (1) automoteur et la cabine (2) suspendue par rapport au châssis automoteur (1).

De manière avantageuse, le vérin oléopneumatique (3) est monté sur deux axes (3a, 3b), tandis que le bras (4) est monté sur un axe (4a) et l'axe (3b) précité commun au vérin oléopneumatique (3).

L'axe (4a) et l'axe (3a) sont solidaires du châssis (1), tandis que l'axe (3b) est solidaire de la cabine (2).

Une barre principale de torsion (5) en U comportant une base (5a) et deux bras latéraux (5b, 5c) est montée entre la cabine (2) et le châssis (1).

La barre principale de torsion (5) en U est articulée par sa partie médiane (5a) sur des paliers (18) de la cabine (2) et à ses extrémités sur deux axes (16 et 17) du châssis (1).

Les points d'articulation (3b, 4a, 17 et 18) définissent un quadrilatère déformable dont deux points (4a et 17) se trouvent sur le châssis (1) et deux autres points (3b et 18) se trouvent sur la cabine (2).

L'organe (3) de suspension assure essentiellement le filtrage vertical des chocs et vibrations lors du déplacement du chariot tout terrain.

Le triangle formé par les sommets (3a, 3b et 4a) se déforme en filtrant les vibrations et les mouvements de tangage et de roulis de la cabine (2).

Le maintien en position stable de la cabine (2) est assuré par la barre de torsion (5) en U comportant les éléments (5a, 5b, 5c).

L'articulation (16) est placée sensiblement au niveau du plan défini par les éléments (5a, 5b) de la barre de torsion en U.

La barre de torsion (5) en U comporte un élément (5c) sensiblement parallèle à l'élément (5b), de sorte que le point d'articulation (16) sur la cabine est sensiblement au niveau du point d'articulation (17) situé à l'arrière de la cabine.

En prévoyant une barre de torsion (5) en U de grande raideur, les sollicitations verticales et transversales sont reprises intégralement par l'organe (3) élastique d'amortissement.

La transmission des différences de réaction entre l'avant et l'arrière de la cabine (2) est assurée par la barre de torsion (5) interagissant avec les articulations avant (16) et arrière (17).

La raideur de la barre de torsion (5) en U permet le report des réactions entre l'avant et l'arrière pour amortir le tangage de la cabine (2).

L'organe (3) d'amortissement comporte dans cet exemple une sortie (3c) pour une correction de hauteur, dans le cas où l'opérateur du chariot tout terrain souhaite modifier l'assise ou la hauteur de la cabine (2) pour le travail en cours.

Les axes (16 et 17) sont solidaires du châssis (1) dans ce mode de réalisation.

Un organe auxiliaire (19) d'amortissement peut également être monté entre la cabine (2) et le châssis (1), à l'avant de la cabine (2) pour suppléer le manque d'amortissement intrinsèque de la barre de torsion et de ses paliers caoutchoutés.

L'invention décrite en référence à plusieurs modes de réalisation ne leur est nullement limitée, mais couvre au contraire toute modification de forme et toute variante de réalisation dans le cadre des revendications annexées.

## Revendications

1. Dispositif de suspension de cabine (2) de véhicule comportant une barre principale (5) de torsion en U et un actionneur (3, 13) principal, caractérisé en combinaison par le fait que la barre principale (5) de torsion en U est disposée sensiblement selon l'axe longitudinal du véhicule, pour assurer le maintien en position stable et reprendre intégralement la réaction statique en tangage de la cabine (2), et par le fait que le dispositif comporte un moyen amortisseur secondaire (19) dynamique disposé à l'avant de la cabine (2).

2. Dispositif selon la revendication 1, **caractérisé par le fait que** les extrémités (6, 7) de la barre de torsion en U sont fixées à l'avant et à l'arrière de la cabine (2).

3. Dispositif selon la revendication 1, **caractérisé par le fait que** les extrémités (16, 17) de la barre de torsion en U sont fixées au châssis (1) du véhicule.

4. Dispositif selon l'une quelconque des revendications précédentes, **caractérisé par le fait que** l'actionneur principal (3) est disposé à l'arrière de la cabine (2).

5. Dispositif selon la revendication 1, **caractérisé par le fait que** le moyen amortisseur secondaire (19) est un amortisseur à inertie.

6. Dispositif selon la revendication 1, **caractérisé par le fait que** le moyen amortisseur secondaire (19) est un amortisseur hydraulique télescopique.

7. Dispositif selon la revendication 1, **caractérisé par le fait que** l'actionneur principal (3) est choisi dans le groupe comportant : un ensemble classique (13) à ressort hélicoïdal (13a) et amortisseur hydraulique télescopique (13b), un système pneumatique passif, un système oléopneumatique passif (3), un système hydropneumatique actif couplé à un calculateur électronique, un système à amortissement variable magnéto-rhéologique, et un ressort élastomère.

8. Dispositif selon la revendication 1, **caractérisé en ce qu'**au moins une extrémité (6 ou 7) de la barre (5) de torsion en U est reliée à la cabine (2) par l'intermédiaire d'un moyen amortisseur latéral (9).

9. Dispositif selon la revendication 8, **caractérisé par le fait que** le moyen amortisseur latéral (9) est un moyen amortisseur élastomère.

10. Dispositif selon l'une quelconque des revendications précédentes, **caractérisé par le fait que** le dispositif comporte un mécanisme (10) contrôlant le déplacement relatif des points hauts (3b) et bas (7) d'un quadrilatère déformable (3b, 4a, 8, 7) formé par les points d'articulation d'un bras (4) et de la barre (5) de torsion en U.

## Patentansprüche

1. Vorrichtung zur Aufhängung einer Fahrzeugkabine (2), die einen U-förmigen Haupt-Torsionsstab (5) und einen Hauptaktuator (3, 13) aufweist, gekennzeichnet in Kombination dadurch, dass der U-förmige Haupt-Torsionsstab (5) etwa gemäß der Längsachse des Fahrzeugs angeordnet ist, um den Halt in stabiler Position zu sichern und die statische Stampfschwingungsreaktion der Kabine (2) vollständig zu übernehmen, und dadurch, dass die Vorrichtung ein dynamisches sekundäres Dämpfungsmittel (19) aufweist, das an der Kabine (2) vorn angeordnet ist.

2. Vorrichtung nach Anspruch 1, **dadurch gekennzeichnet, dass** die Enden (6, 7) des U-förmigen Torsionsstabs an der Kabine (2) vorn und hinten befestigt sind.

3. Vorrichtung nach Anspruch 1, **dadurch gekennzeichnet, dass** die Enden (16, 17) des U-förmigen Torsionsstabs am Fahrgestell (1) des Fahrzeugs befestigt sind.

4. Vorrichtung nach einem der vorangehenden Ansprüche, **dadurch gekennzeichnet, dass** der Hauptaktuator (3) an der Kabine (2) hinten angeordnet ist.

5. Vorrichtung nach Anspruch 1, **dadurch gekennzeichnet, dass** das sekundäre Dämpfungsmittel (19) ein Trägheitsdämpfer ist.

6. Vorrichtung nach Anspruch 1, **dadurch gekennzeichnet, dass** das sekundäre Dämpfungsmittel (19) ein hydraulischer Teleskopdämpfer ist.

7. Vorrichtung nach Anspruch 1, **dadurch gekennzeichnet, dass** der Hauptaktuator (3) aus der Gruppe ausgewählt ist, die aufweist: eine klassische Einheit (13) mit Spiralfeder (13a) und hydraulischem Teleskopdämpfer (13b), ein passives pneumatisches System, ein passives Öl-Druckluft-System (3), ein aktives hydropneumatisches, mit einem elektronischen Rechner gekoppeltes System, ein magnetrheologisches System mit variabler Dämpfung und eine Elastomerfeder.

8. Vorrichtung nach Anspruch 1, **dadurch gekennzeichnet, dass** mindestens ein Ende (6 oder 7) der U-förmigen Torsionsstange (5) mittels eines seitlichen Dämpfungsmittels (9) mit der Kabine (2) verbunden ist.

9. Vorrichtung nach Anspruch 8, **dadurch gekennzeichnet, dass** das seitliche Dämpfungsmittel (9) ein Elastomer-Dämpfungsmittel ist.

10. Vorrichtung nach einem der vorangehenden Ansprüche, **dadurch gekennzeichnet, dass** die Vorrichtung einen Mechanismus (10) aufweist, der die relative Verlagerung der hohen (3b) und niedrigen (7) Punkte eines verformbaren Vierecks (3b, 4a, 8, 7) kontrolliert, das von den Gelenkpunkten eines Arms (4) und der U-förmigen Torsionsstange (5) gebildet ist.

## Claims

1. A suspension device for the cab (2) of a vehicle comprising a U-shaped primary torsion bar (5) and a primary actuator (3, 13), **characterized in** combination **in that** the U-shaped primary torsion bar (5) is positioned substantially along the longitudinal axis of the vehicle, to ensure maintenance in the stable position and completely react the static pitch reaction of the cab (2), and **in that** the device comprises a dynamic secondary damping means (19) positioned at the front of the cab (2).

2. The device according to claim 1, **characterized in that** the ends (6, 7) of the U-shaped torsion bar are fastened to the front and back of the cab (2).

3. The device according to claim 1, **characterized in that** the ends (16, 17) of the U-shaped torsion bar are fastened to the chassis (1) of the vehicle.

4. The device according to any one of the preceding claims, **characterized in that** the primary actuator (3) is positioned at the back of the cab (2).

5. The device according to claim 1, **characterized in that** the secondary damping means (19) is an inertia damper.

6. The device according to claim 1, **characterized in that** the secondary damping means (19) is a telescoping hydraulic damper.

7. The device according to claim 1, **characterized in that** the primary actuator (3) is chosen from the group comprising: a traditional assembly (13) with a helical spring (13a) and telescoping hydraulic damper (13b), a passive pneumatic system, a passive oleo-pneumatic system (3), an active hydropneumatic system coupled to an electronic computer, a magnetorheological variable damping system, and an elastomeric spring.

8. The device according to claim 1, **characterized in that** at least one end (6 or 7) of the U-shaped torsion bar (5) is connected to the cab (2) by means of a lateral damping means (9).

9. The device according to claim 8, **characterized in that** the lateral damping means (9) is an elastomeric damping means.

10. The device according to any one of the preceding claims, **characterized in that** the device comprises a mechanism (10) controlling the relative movement of the high (3b) and low (7) points of a deformable quadrilateral (3b, 4a, 8, 7) formed by the articulation points of an arm (4) and the U-shaped torsion bar (5).
